# EUROPEAN PATENT APPLICATION

(11) **EP 4 715 943 A1**
(43) Date of publication of application: **25.03.2026**
(21) Application number: 23940499.9
(22) Date of filing: 18.12.2023
(51) Int. Cl.: H01M 10/058, H01M 10/052, H01M 4/13, H01M 4/62, H01M 10/42, H01M 50/249

(54) **ELECTRODE ASSEMBLY, BATTERY CELL, BATTERY, AND ELECTRICAL DEVICE**

(30) Priority: 05.06.2023 CN 202310654723
(71) Applicant: Contemporary Amperex Technology Co., Limited, Ningde, Fujian 352100 (CN)
(72) Inventor: ZHOU, Yi, Ningde, Fujian 352100 (CN); ZHANG, Ming, Ningde, Fujian 352100 (CN)
(74) Representative: Kraus & Lederer PartGmbB
(86) International application number: PCT/CN2023/139502
(87) International publication number: WO 2024/250625

(57) **Abstract**

This application provides an electrode assembly, a battery cell, a battery, and an electric device. The electrode assembly includes a negative electrode plate, a positive electrode plate, and a separator, where the negative electrode plate includes a negative electrode film layer, the negative electrode film layer including a fluorinated polymer; and the positive electrode plate includes a positive electrode film layer, the positive electrode film layer including a nitrile-based polymer material. Using this electrode assembly can significantly improve the cycle performance of batteries.

## Description

### CROSS-REFERENCE TO RELATED APPLICATIONS

This application claims priority to Chinese Patent Application No. 202310654723.2, filed on June 5, 2023 and entitled "ELECTRODE ASSEMBLY, BATTERY CELL, BATTERY, AND ELECTRIC DEVICE", which is incorporated herein by reference in its entirety.

### TECHNICAL FIELD

This application relates to the field of lithium battery technology, and in particular, to an electrode assembly, a battery cell, a battery, and an electric device.

### BACKGROUND

Battery cells have advantages such as reliable performance, no pollution, and no memory effect, and thus are widely used. For example, with increasing emphasis on environmental protection, new energy vehicles are becoming increasingly popular, and the demand for power-type battery cells is expected to grow explosively.

As the application scope of batteries continues to expand, the requirements for battery performance are becoming higher and higher. However, the internal resistance of battery cells can cause polarization, which affects the cycle performance of the battery. Therefore, there is a need to improve the cycle performance of batteries.

### SUMMARY

This application provides an electrode assembly, a battery cell, a battery, and an electric device, which can effectively improve the cycle performance of batteries.

In a first aspect, this application provides an electrode assembly including a negative electrode plate, a positive electrode plate, and a separator, where the negative electrode plate includes a negative electrode film layer, the negative electrode film layer including a fluorinated polymer; the positive electrode plate includes a positive electrode film layer, the positive electrode film layer including a nitrile-based polymer material.

According to this application, the fluorinated polymer in the negative electrode film layer can form a fluoride-rich negative electrode solid electrolyte interphase film (SEI film), which is structurally stable and can enhance ionic conductivity, thereby reducing polarization and improving the cycle performance of the battery. Additionally, the nitrile-based polymer material in the positive electrode film layer can, on one hand, enhance the ion transport performance of the positive electrode plate and, on the other hand, capture hydrogen ions to prevent their adverse effects on the positive electrode interface. Moreover, since the fluorinated polymer generates hydrogen ions during the formation of the SEI film, the use of nitrile-based polymer material in the positive electrode film layer can effectively mitigate the adverse effects of the fluorinated polymer on the positive electrode of the battery. Through their synergistic effect, the battery containing the above electrode assembly can exhibit good cycle performance.

In some embodiments, the fluorinated polymer includes at least one of polyvinylidene fluoride, ethylene-tetrafluoroethylene copolymer, polyvinyl fluoride, fluorinated polyacrylate fluororubber, fluorinated polyester rubber, and fluorosilicone rubber. The use of these specific types of fluorinated polymers enables the battery to have good cycle performance.

In some embodiments, a mass percentage of the fluorinated polymer in the negative electrode film layer is 0.1% to 2.5%. This allows the formation of an SEI film with good ion transport performance and stability, with minimal impact on the positive electrode, resulting in better cycle performance of the battery.

Preferably, the mass percentage of the fluorinated polymer in the negative electrode film layer is 0.2% to 2%.

In some embodiments, the positive electrode film layer satisfies at least one of the following conditions: (1) the nitrile-based polymer material has a weight-average molecular weight of 200,000 to 2,000,000; (2) a mass percentage of cyano groups in the nitrile-based polymer material is 15% to 50%; and (3) a mass percentage of the nitrile-based polymer material in the positive electrode film layer is 0.2% to 5%. This results in a positive electrode interface with good ion transport performance and effectively reduces the impact of hydrogen ions on the positive electrode interface, leading to better cycle performance of the battery.

Preferably, the positive electrode film layer satisfies at least one of the following conditions: (1) the nitrile-based polymer material has a weight-average molecular weight of 400,000 to 1,000,000; (2) the mass percentage of cyano groups in the nitrile-based polymer material is 25% to 40%; and (3) the mass percentage of the nitrile-based polymer material in the positive electrode film layer is 0.5% to 1.5%.

In some embodiments, the nitrile-based polymer material includes at least one of nitrile rubber, hydrogenated nitrile rubber, carboxylated nitrile rubber, polyacrylonitrile, and vulcanized nitrile rubber. The use of these specific types of nitrile-based polymer materials enables the battery to have better cycle performance.

In some embodiments, the positive electrode film layer further includes a second binder, the second binder including at least one of polyvinylidene fluoride, polyvinylidene fluoride-hexafluoropropylene copolymer, polyvinyl alcohol, starch, hydroxypropyl cellulose, regenerated cellulose, polyvinylpyrrolidone, polytetrafluoroethylene, polyethylene, polypropylene, ethylene-propylene-diene polymer, sodium carboxymethyl cellulose, and styrene-butadiene rubber. Adding a second binder with low swelling rate to the positive electrode film layer can enhance the stability of the positive electrode film layer, thereby improving the cycle performance of the battery.

In some embodiments, the positive electrode film layer includes a positive electrode active material, the positive electrode active material including at least one of lithium iron phosphate, lithium cobalt oxide, and LiₐNiₓCo_{y}M_{1-x-y}O_{b}, where 0.8 < a < 1.2, 0 < x < 1, 0 < y < 1, 1.8 < b < 2.2, and M is selected from Mn and/or Al. The electrode assembly provided by this application offers good protection for the positive electrode active material and provides excellent ion transport performance at the positive electrode interface, allowing the use of positive electrode active materials with higher energy density as needed.

In a second aspect, this application provides a preparation method of an electrode assembly, including the following steps: forming a negative electrode film layer on at least one side of a negative electrode current collector to obtain a negative electrode plate, where the negative electrode film layer includes a fluorinated polymer; forming a positive electrode film layer on at least one side of a positive electrode current collector to obtain a positive electrode plate, where the positive electrode film layer includes a nitrile-based polymer material.

According to this application, conventional preparation methods can be used to add a fluorinated polymer to the negative electrode film layer and a nitrile-based polymer material to the positive electrode film layer to obtain the electrode assembly described in any embodiment of the first aspect, achieving any of the beneficial effects of the first aspect.

In some embodiments, forming the negative electrode film layer on at least one side of the negative electrode current collector specifically includes: uniformly mixing a negative electrode active material with a fluorinated polymer to disperse the fluorinated polymer on the surface of the negative electrode active material, thereby obtaining a negative electrode premix; dispersing the negative electrode premix and a first binder in a first solvent to obtain a negative electrode slurry; applying the negative electrode slurry on at least one side of the negative electrode current collector to form the negative electrode film layer. Pre-mixing the negative electrode active material with the fluorinated polymer allows the fluorinated polymer to pre-coat the negative electrode active material, which can more effectively enhance ion transport efficiency, reduce direct current resistance, and achieve co-insertion during SEI film formation, further increasing the toughness and structural stability of the SEI film, thereby improving the cycle performance of the battery.

In some embodiments, the negative electrode premix further includes a first binder and a first solvent. Adding a first binder and a first solvent to the negative electrode premix can improve the dispersion of the fluorinated polymer, making it easier to coat the negative electrode active material, further enhancing the cycle performance of the battery.

In some embodiments, forming the positive electrode film layer on at least one side of the positive electrode current collector specifically includes: uniformly mixing a positive electrode active material with a nitrile-based polymer material to disperse the nitrile-based polymer material on the surface of the positive electrode active material, thereby obtaining a positive electrode premix; dispersing the positive electrode premix and a second binder in a second solvent to obtain a positive electrode slurry; applying the positive electrode slurry on at least one side of the positive electrode current collector to form the positive electrode film layer. Pre-mixing the positive electrode active material with the nitrile-based polymer material allows the nitrile-based polymer material to pre-coat the positive electrode active material, which can more effectively enhance ion transport efficiency at the positive electrode interface. Additionally, the nitrile-based polymer material on the surface of the positive electrode active material can better capture hydrogen ions, thereby stabilizing the metal elements on the surface of the positive electrode active material, reducing the impact of hydrogen ions generated by the fluorinated polymer in the negative electrode film layer on battery performance, and further synergistically improving the cycle performance of the battery.

In some embodiments, the positive electrode premix further includes a second solvent, and a solid content of the positive electrode premix is 80% to 90%. Adding a second solvent to the positive electrode premix can improve the dispersion of the nitrile-based polymer material, making it easier to coat the positive electrode active material, further enhancing the cycle performance of the battery. Optionally, the solid content of the positive electrode premix is 83% to 86%.

In a third aspect, this application provides a battery cell including the electrode assembly described in any embodiment of the first aspect or an electrode assembly obtained by the preparation method described in any embodiment of the second aspect.

In a fourth aspect, this application provides a battery including the battery cell described in any embodiment of the third aspect.

In a fifth aspect, this application provides an electric device including at least one of the battery cell described in any embodiment of the third aspect or the battery described in any embodiment of the fourth aspect.

This application provides an electrode assembly that can effectively enhance the ion transport performance of the battery, reduce polarization, and provide good protection for the positive electrode active material, enabling the battery to exhibit excellent cycle performance.

### BRIEF DESCRIPTION OF DRAWINGS

FIG. 1 is a schematic diagram of a battery cell according to an embodiment of this application.
FIG. 2 is an exploded view of the battery cell shown in FIG. 1 according to an embodiment of this application.
FIG. 3 is a schematic diagram of a battery module according to an embodiment of this application.
FIG. 4 is a schematic diagram of a battery according to an embodiment of this application.
FIG. 5 is an exploded view of the battery shown in FIG. 4 according to an embodiment of this application.
FIG. 6 is a schematic diagram of an electric device using a battery cell as a power source according to an embodiment of this application.

Description of reference signs:
1 Battery; 2 Upper box body; 3 Lower box body; 4 Battery module; 5 Battery cell; 51 Housing; 52 Electrode assembly; 53 Top cover assembly.

### DESCRIPTION OF EMBODIMENTS

Hereinafter, embodiments specifically disclosing the electrode assembly, battery cell, battery, and electric device of this application are described in detail with appropriate reference to the drawings. However, unnecessary detailed descriptions may be omitted in some cases. For example, detailed descriptions of well-known matters or repetitive descriptions of substantially identical structures may be omitted. This is to avoid unnecessarily lengthy descriptions and to facilitate understanding by persons skilled in the art. Additionally, the drawings and the following descriptions are provided for persons skilled in the art to fully understand this application and are not intended to limit the subject matter recited in the claims.

The "ranges" disclosed in this application are defined in the form of lower and upper limits, where a given range is defined by selecting a lower limit and an upper limit, and the selected lower and upper limits define the boundaries of a particular range. Ranges defined in this manner may include or exclude the endpoints and can be arbitrarily combined, meaning any lower limit can be combined with any upper limit to form a range. For example, if ranges of 60 to 120 and 80 to 110 are listed for a specific parameter, it is understood that ranges of 60 to 110 and 80 to 120 are also contemplated. Additionally, if minimum range values of 1 and 2 are listed, and maximum range values of 3, 4, and 5 are listed, the following ranges are all contemplated: 1 to 3, 1 to 4, 1 to 5, 2 to 3, 2 to 4, and 2 to 5. In this application, unless otherwise specified, the numerical range "a to b" represents an abbreviated representation of any combination of real numbers between a and b, where both a and b are real numbers. For example, the numerical range "0 to 5" means that all real numbers between "0 to 5" have been listed herein, and "0 to 5" is merely an abbreviated representation of these numerical combinations. Additionally, when a parameter is expressed as an integer ≥ 2, it is equivalent to disclosing that the parameter is, for example, an integer 2, 3, 4, 5, 6, 7, 8, 9, 10, 11, 12, or the like.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps of this application can be performed sequentially or randomly, preferably sequentially. For example, the method including steps (a) and (b) indicates that the method may include steps (a) and (b) performed sequentially, or steps (b) and (a) performed sequentially. For example, mentioning that the method may further include step (c) indicates that step (c) can be added to the method in any order, for example, the method may include steps (a), (b), and (c), or steps (a), (c), and (b), or steps (c), (a), and (b).

Unless otherwise specified, the terms "include" and "comprise" mentioned in this application indicate an open-ended or closed-ended interpretation. For example, "include" and "comprise" may indicate that other components not listed may also be included or comprised, or only the listed components may be included or comprised.

Unless otherwise specified, the term "or" in this application is inclusive. For example, the phrase "A or B" means "A, B, or both A and B." More specifically, any of the following conditions satisfy the condition "A or B": A is true (or exists) and B is false (or does not exist); A is false (or does not exist) and B is true (or exists); or both A and B are true (or exist).

As described in the background art, with the expanding application scope of batteries, the requirements for battery performance are increasing. However, the internal resistance of battery cells can cause polarization, affecting the cycle performance of the battery. Therefore, there is a need to improve the cycle performance of batteries.

To address the above issue, in related technologies, a fluoride-rich SEI film (for example, containing LiF in lithium-ion batteries) can be formed by adding a fluorinated polymer to the negative electrode film layer during battery formation or cycling, thereby regulating the negative electrode/electrolyte interface of the battery to achieve a stable SEI film structure with good ionic conductivity. This can reduce the direct current resistance of the battery, decrease polarization, and improve the cycle performance of the battery.

However, the issue with adding a fluorinated polymer to the negative electrode film layer is that while it can contribute to forming an SEI film with good performance, it also generates hydrogen ions during this process. These hydrogen ions significantly reduce the stability of the positive electrode solid electrolyte interphase film (CEI film) and affect the structure of the positive electrode active material, causing the dissolution of metal ions from the positive electrode active material, which leads to a decrease in the cycle performance of the battery. This significantly weakens the positive effect of the fluorinated polymer on improving battery cycle performance and limits the application of the fluorinated polymer.

Based on this, this application provides an electrode assembly where a fluorinated polymer is added to the negative electrode film layer, and a nitrile-based polymer material is added to the positive electrode film layer. This can effectively reduce the impact of hydrogen ions on the positive electrode interface of the battery and improve the ion transport performance at the positive electrode/electrolyte interface, thereby synergistically enhancing the effect of the fluorinated polymer and effectively improving the cycle performance of the battery.

It should also be noted that the battery cells and batteries mentioned in the context of this application include, but are not limited to, lithium batteries, sodium batteries, magnesium batteries, and more.

### Electrode assembly

In a first aspect, this application provides an electrode assembly including a negative electrode plate, a positive electrode plate, and a separator, where the negative electrode plate includes a negative electrode film layer, the negative electrode film layer including a fluorinated polymer; the positive electrode plate includes a positive electrode film layer, the positive electrode film layer including a nitrile-based polymer material.

According to this application, the electrode assembly includes a negative electrode plate, a positive electrode plate, and a separator, where the negative electrode film layer of the negative electrode plate contains a fluorinated polymer. Taking a lithium-ion battery including this electrode assembly as an example, the fluorinated polymer in the negative electrode film layer participates in the formation of the SEI film during the formation or cycling of the lithium-ion battery, making the SEI film rich in LiF. LiF can effectively enhance the stability of the SEI film and improve its ion transport performance, thereby reducing polarization at the negative electrode/electrolyte interface during cycling and improving the cycle performance of the battery.

Additionally, the positive electrode film layer of the positive electrode plate includes a nitrile-based polymer material. Due to the strongly polar cyano group (-C≡N) in the nitrile-based polymer material, on one hand, the lone pair electrons on the cyano group can serve as coordination sites for lithium ions and effectively increase the dielectric constant of the nitrile-based polymer material, thereby improving the ion transport performance at the positive electrode/electrolyte interface. On the other hand, the lone pair electrons on the strongly polar cyano group have a strong capturing effect on hydrogen ions in the electrolyte, thereby effectively reducing the concentration of hydrogen ions in the electrolyte and mitigating the adverse effects of the fluorinated polymer in the negative electrode film layer on the positive electrode. Furthermore, cyano groups also have good thermal stability, mechanical strength, and electrochemical compatibility, enabling them to form strong hydrogen bonds and dipole-dipole interactions with groups on the surface of the positive electrode active material, thereby effectively stabilizing the structure of the positive electrode active material. This further reduces the impact of hydrogen ions in the electrolyte on the positive electrode active material and minimizes the dissolution of metal ions from the positive electrode active material. Thus, the inclusion of the nitrile-based polymer material in the positive electrode film layer effectively mitigates the adverse effects of the fluorinated polymer in the negative electrode film layer on the positive electrode while improving the ion transport performance at the positive electrode/electrolyte interface, reducing polarization at the positive electrode/electrolyte interface during cycling, and enhancing the cycle performance of the battery.

In summary, according to this application, by simultaneously adding a fluorinated polymer to the negative electrode film layer and a nitrile-based polymer material to the positive electrode film layer, the ion transport performance at both the positive electrode/electrolyte interface and the negative electrode/electrolyte interface can be effectively improved, while reducing the impact of hydrogen ions on the positive electrode/electrolyte interface, ensuring the stability of the positive electrode active material, and synergistically enhancing the cycle performance of the battery.

### [Negative electrode plate]

In some embodiments, the fluorinated polymer includes at least one of polyvinylidene fluoride, ethylene-tetrafluoroethylene copolymer, polyvinyl fluoride, fluorinated polyacrylate fluororubber, fluorinated polyester rubber, and fluorosilicone rubber.

In the above embodiments, several commonly used fluorinated polymers in the art are specifically listed. The use of these specific types of fluorinated polymers can form an SEI film with good ion transport performance and stability, enabling the battery to have excellent cycle performance. It should be noted that the fluorinated polymers are not limited to those listed above, and persons skilled in the art can select any known fluorinated polymers in the art as needed.

In some embodiments, a mass percentage of the fluorinated polymer in the negative electrode film layer is 0.1% to 2.5%.

In the above embodiments, the mass percentage of the fluorinated polymer in the negative electrode film layer is further defined to be 0.1% to 2.5%. This enables the formation of an SEI film with good ion transport performance and stability, enhancing the ion transport performance at the negative electrode/electrolyte interface. Additionally, at this level, fewer hydrogen ions are generated during the SEI film formation process, resulting in a lower hydrogen ion concentration in the electrolyte, which does not significantly affect the stability of the positive electrode/electrolyte interface, thereby leading to better cycle performance of the battery. For example, the mass percentage of the fluorinated polymer in the negative electrode film layer can be 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, or within a range defined by any of the above values. Preferably, the mass percentage of the fluorinated polymer in the negative electrode film layer is 0.2% to 2%, resulting in better cycle performance of the battery.

In some embodiments, the negative electrode plate includes a negative electrode current collector, and the negative electrode film layer is disposed on at least one surface of the negative electrode current collector, the negative electrode film layer including a negative electrode active material.

As an example, the negative electrode current collector has two opposing surfaces in its thickness direction, and the negative electrode film layer is disposed on either one or both of the opposing surfaces of the negative electrode current collector.

In some embodiments, the negative electrode current collector may be a metal foil or a composite current collector. For example, as a metal foil, it may be a copper foil. The composite current collector may include a polymer material base layer and a metal layer formed on at least one surface of the polymer material base layer. The composite current collector may be formed by depositing a metal material (such as copper, copper alloy, nickel, nickel alloy, titanium, titanium alloy, silver, or silver alloy) on a polymer material substrate (such as polypropylene (PP), polyethylene terephthalate (PET), polybutylene terephthalate (PBT), polystyrene (PS), or polyethylene (PE)).

In some embodiments, the negative electrode active material may be any known negative electrode active material used in batteries. As an example, the negative electrode active material may include at least one of the following materials: artificial graphite, natural graphite, soft carbon, hard carbon, silicon-based materials, tin-based materials, and lithium titanate. The silicon-based material may be selected from at least one of elemental silicon, silicon oxide compounds, silicon-carbon composites, silicon-nitrogen composites, and silicon alloys. The tin-based material may be selected from at least one of elemental tin, tin oxide compounds, and tin alloys. However, this application is not limited to these materials, and other conventional materials that can be used as negative electrode active materials for batteries may also be used. These negative electrode active materials may be used alone or in combination of two or more.

In some embodiments, the negative electrode film layer may optionally further include a first binder. The first binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may optionally further include a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer may optionally further include other additives, such as a thickener (for example, sodium carboxymethyl cellulose (CMC-Na)).

### [Positive electrode plate]

In some embodiments, the positive electrode film layer satisfies at least one of the following conditions: (1) the nitrile-based polymer material has a weight-average molecular weight of 200,000 to 2,000,000; (2) a mass percentage of cyano groups in the nitrile-based polymer material is 15% to 50%; and (3) a mass percentage of the nitrile-based polymer material in the positive electrode film layer is 0.2% to 5%.

Preferably, the positive electrode film layer satisfies at least one of the following conditions: (1) the nitrile-based polymer material has a weight-average molecular weight of 400,000 to 1,000,000; (2) the mass percentage of cyano groups in the nitrile-based polymer material is 25% to 40%; and (3) the mass percentage of the nitrile-based polymer material in the positive electrode film layer is 0.5% to 1.5%.

In the above embodiments, the weight-average molecular weight of the nitrile-based polymer material, the mass percentage of cyano groups in the nitrile-based polymer material, and the mass percentage of the nitrile-based polymer material in the positive electrode film layer are further defined.

The weight-average molecular weight of the nitrile-based polymer material can range from 200,000 to 2,000,000. At this range, the nitrile-based polymer material is more easily dispersed on the surface of the positive electrode active material, effectively reducing the impact of hydrogen ions in the electrolyte on the positive electrode active material while promoting ion migration and increasing ion transport rates. Additionally, at this range, the swelling rate of the nitrile-based polymer material is relatively lower, further enhancing the stability of the positive electrode film layer, resulting in better cycle performance of the battery. For example, the weight-average molecular weight of the nitrile-based polymer material can be 200,000, 300,000, 400,000, 500,000, 600,000, 700,000, 800,000, 900,000, 1,000,000, 1,100,000, 1,200,000, 1,300,000, 1,400,000, 1,500,000, 1,600,000, 1,700,000, 1,800,000, 1,900,000, 2,000,000, or within a range defined by any of the above values. Preferably, the weight-average molecular weight of the nitrile-based polymer material is 400,000 to 1,000,000, resulting in better cycle performance of the battery.

It should be noted that the weight-average molecular weight of the nitrile-based polymer material has a well-known meaning in the art and can be tested using known instruments and methods. For example, the weight-average molecular weight of the nitrile-based polymer material can be tested using the gel permeation chromatography (GPC) method. In this technical field, the unit of weight-average molecular weight is generally omitted, and unless otherwise specified, the unit is Dalton.

The mass percentage of cyano groups in the nitrile-based polymer material can be 15% to 50%. In this application, since the nitrile-based polymer material in the electrode assembly primarily functions through its strongly polar cyano groups, the mass percentage of cyano groups in the nitrile-based polymer material has a certain impact on the cycle performance of the battery. When the mass percentage of cyano groups is 15% to 50%, the nitrile-based polymer material exhibits better thermal stability, mechanical strength, and electrochemical compatibility. For lithium-ion batteries, for example, there are sufficient cyano groups in the positive electrode film layer to coordinate lithium ions, thereby increasing the ion transport rate. Additionally, the cyano groups have stronger interactions with the positive electrode active material and better capture hydrogen ions in the electrolyte, providing better protection for the positive electrode active material and resulting in better cycle performance of the battery.

It is also worth mentioning that when the mass percentage of cyano groups is 15% to 50%, the nitrile-based polymer material exhibits a relatively lower swelling rate in the electrolyte, further enhancing the stability of the positive electrode film layer, thereby improving the cycle performance of the battery. For example, the mass percentage of cyano groups in the nitrile-based polymer material can be 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, or within a range defined by any of the above values. Preferably, the mass percentage of cyano groups in the nitrile-based polymer material is 25% to 40%.

It should be noted that the mass percentage of cyano groups in the nitrile-based polymer material has a well-known meaning in the art and can be tested using known instruments and methods, for example, the mass percentage of cyano groups in the nitrile-based polymer material can be in accordance with the test standard GB/T7717.9.

The mass percentage of the nitrile-based polymer material in the positive electrode film layer can be 0.2% to 5%. At this range, there is a sufficient amount of nitrile-based polymer material dispersed on the surface of the positive electrode active material to effectively perform its functions as described above. Additionally, the stability of the positive electrode film layer is relatively better, effectively preventing delamination issues due to the swelling of the nitrile-based polymer material, resulting in better cycle performance of the battery. For example, the mass percentage of the nitrile-based polymer material in the positive electrode film layer can be 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, or within a range defined by any of the above values. Preferably, the mass percentage of the nitrile-based polymer material in the positive electrode film layer is 0.5% to 1.5%.

In some embodiments, the nitrile-based polymer material includes at least one of nitrile rubber, hydrogenated nitrile rubber, carboxylated nitrile rubber, polyacrylonitrile, and vulcanized nitrile rubber.

In the above embodiments, several commonly used nitrile-based polymer materials in the art are specifically listed. The use of these specific types of nitrile-based polymer materials can enhance the ion transport rate at the positive electrode/electrolyte interface and protect the stability of the positive electrode/electrolyte interface, enabling the battery to have excellent cycle performance. It should be noted that the nitrile-based polymer materials are not limited to those listed above, and persons skilled in the art can select any known nitrile-based polymer materials in the art as needed.

In some embodiments, the positive electrode film layer further includes a second binder, the second binder including at least one of polyvinylidene fluoride, polyvinylidene fluoride-hexafluoropropylene copolymer, polyvinyl alcohol, starch, hydroxypropyl cellulose, regenerated cellulose, polyvinylpyrrolidone, polytetrafluoroethylene, polyethylene, polypropylene, ethylene-propylene-diene polymer, sodium carboxymethyl cellulose, and styrene-butadiene rubber.

In the above embodiments, the positive electrode film layer may further include a second binder. Although the nitrile-based polymer material, due to its strongly polar cyano groups, provides the beneficial effects described above and has a certain binding function, serving as a binder for the positive electrode film layer, its swelling rate in the electrolyte is higher compared to the second binders listed in the above embodiments. If only the nitrile-based polymer material is used to bind the components in the positive electrode film layer and the positive electrode film layer to the positive electrode current collector, the swelling of the nitrile-based polymer material during battery cycling may lead to reduced adhesion, or even delamination of the positive electrode film layer from the positive electrode current collector, resulting in decreased cycle performance of the battery. Therefore, in some embodiments, a second binder with a lower swelling rate can be further added to the positive electrode film layer. The above second binders maintain stable adhesion of the components in the positive electrode film layer and between the positive electrode film layer and the positive electrode current collector even after prolonged cycling, further enhancing the cycle performance of the battery.

In some embodiments, the positive electrode plate includes a positive electrode current collector, and the positive electrode film layer is disposed on at least one surface of the positive electrode current collector, the positive electrode film layer including a positive electrode active material.

As an example, the positive electrode current collector has two opposing surfaces in its thickness direction, and the positive electrode film layer is disposed on either one or both of the opposing surfaces of the positive electrode current collector.

In some embodiments, the positive electrode current collector may be a metal foil or a composite current collector. For example, as a metal foil, it may be an aluminum foil. The composite current collector may include a polymer material base layer and a metal layer formed on at least one surface of the polymer material base layer. The composite current collector may be formed by depositing a metal material (such as aluminum, aluminum alloy, nickel, nickel alloy, titanium, titanium alloy, silver, or silver alloy) on a polymer material substrate (such as polypropylene (PP), polyethylene terephthalate (PET), polybutylene terephthalate (PBT), polystyrene (PS), or polyethylene (PE)).

In some embodiments, the positive electrode active material may be any known positive electrode active material used in batteries. As an example, the positive electrode active material may include at least one of the following materials: lithium-containing phosphates with an olivine structure, lithium transition metal oxides, and their respective modified compounds. However, this application is not limited to these materials, and other conventional materials that can be used as positive electrode active materials for batteries may also be used. These positive electrode active materials may be used alone or in combination of two or more. Examples of lithium transition metal oxides may include, but are not limited to, at least one of lithium cobalt oxide (for example, LiCoO₂), lithium nickel oxide (for example, LiNiO₂), lithium manganese oxide (for example, LiMnO₂ or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), or LiNi_{0.8}Co_{0.1}Mn_{0.1}O₂ (also referred to as NCM811)), lithium nickel cobalt aluminum oxide (for example, LiNi_{0.85}Co_{0.15}Al_{0.05}O₂), and their modified compounds. Examples of lithium-containing phosphates with an olivine structure may include, but are not limited to, at least one of lithium iron phosphate (for example, LiFePO₄ (also referred to as LFP)), lithium iron phosphate-carbon composites, lithium manganese phosphate (for example, LiMnPO₄), lithium manganese phosphate-carbon composites, lithium manganese iron phosphate, and lithium manganese iron phosphate-carbon composites.

In some embodiments, the positive electrode active material may include at least one of lithium iron phosphate, lithium cobalt oxide, and LiₐNiₓCo_{y}M_{1-x-y}O_{b}, where 0.8 < a < 1.2, 0 < x < 1, 0 < y < 1, 1.8 < b < 2.2, and M is selected from Mn and/or Al.

In the above embodiments, since the electrode assembly provided by this application offers good protection for the positive electrode active material and provides excellent ion transport performance at the positive electrode interface, positive electrode active materials with higher energy density can be used as needed.

In some embodiments, the positive electrode film layer may optionally further include a conductive agent. As an example, the conductive agent may include at least one of superconducting carbon, acetylene black, carbon black, Ketjen black, carbon dots, carbon nanotubes, graphene, and carbon nanofibers.

### [Separator]

This application imposes no particular restrictions on the type of separator, and any known porous structure separator with good chemical and mechanical stability may be used.

In some embodiments, the material of the separator may be selected from at least one of glass fiber, non-woven fabric, polyethylene, polypropylene, and polyvinylidene fluoride. The separator may be a single-layer film or a multilayer composite film, without particular limitation. When the separator is a multilayer composite film, the materials of each layer may be the same or different, without particular limitation.

### Preparation method of electrode assembly

In a second aspect, this application provides a preparation method of an electrode assembly, including the following steps: forming a negative electrode film layer on at least one side of a negative electrode current collector to obtain a negative electrode plate, where the negative electrode film layer includes a fluorinated polymer; and forming a positive electrode film layer on at least one side of a positive electrode current collector to obtain a positive electrode plate, where the positive electrode film layer includes a nitrile-based polymer material.

According to this application, conventional preparation methods can be used to add a fluorinated polymer to the negative electrode film layer and a nitrile-based polymer material to the positive electrode film layer to obtain the electrode assembly described in any embodiment of the first aspect, achieving any of the beneficial effects of the first aspect.

In some embodiments, forming the negative electrode film layer on at least one side of the negative electrode current collector specifically includes: uniformly mixing a negative electrode active material with a fluorinated polymer to disperse the fluorinated polymer on the surface of the negative electrode active material, thereby obtaining a negative electrode premix; dispersing the negative electrode premix and a first binder in a first solvent to obtain a negative electrode slurry; and applying the negative electrode slurry on at least one side of the negative electrode current collector to form the negative electrode film layer.

In the above embodiments, pre-mixing the negative electrode active material with the fluorinated polymer allows the fluorinated polymer to pre-coat the negative electrode active material, which can more effectively enhance ion transport efficiency, reduce direct current resistance, and achieve co-insertion during SEI film formation, further increasing the toughness and structural stability of the SEI film, thereby improving the cycle performance of the battery.

In some embodiments, the negative electrode premix further includes a first binder and a first solvent.

In the above embodiments, adding a first binder and a first solvent to the negative electrode premix can improve the dispersion of the fluorinated polymer, making it easier to coat the negative electrode active material, further enhancing the cycle performance of the battery.

In some embodiments, the types of fluorinated polymer, negative electrode active material, first binder, and negative electrode current collector can be selected as described in the first aspect.

In some embodiments, the first solvent may include at least one of water, dimethylformamide (DMF), diethylformamide, dimethylacetamide (DMAc), N-methylpyrrolidone (NMP), methanol, ethanol, 1-propanol, 2-propanol (isopropanol), 1-butanol (n-butanol), 2-methyl-1-propanol (isobutanol), 2-butanol (sec-butanol), 1-methyl-2-propanol (tert-butanol), pentanol, hexanol, heptanol, octanol; glycols such as ethylene glycol, diethylene glycol, triethylene glycol, propylene glycol, 1,3-propanediol, 1,3-butanediol, 1,5-pentanediol, hexanediol, glycerol, trimethylolpropane, pentaerythritol, sorbitol, ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, tetraethylene glycol monobutyl ether, acetone, methyl ethyl ketone, methyl propyl ketone, cyclopentanone, ethyl acetate, γ-butyrolactone, and ε-caprolactone.

In some embodiments, after the negative electrode slurry is applied on at least one side of the negative electrode current collector, processes such as drying and cold pressing may be performed to form the negative electrode film layer.

In some embodiments, forming the positive electrode film layer on at least one side of the positive electrode current collector specifically includes: uniformly mixing a positive electrode active material with a nitrile-based polymer material to disperse the nitrile-based polymer material on the surface of the positive electrode active material, thereby obtaining a positive electrode premix; dispersing the positive electrode premix and a second binder in a second solvent to obtain a positive electrode slurry; and applying the positive electrode slurry on at least one side of the positive electrode current collector to form the positive electrode film layer.

In some embodiments, pre-mixing the positive electrode active material with the nitrile-based polymer material allows the nitrile-based polymer material to pre-coat the positive electrode active material due to the strong interaction between the cyano groups in the nitrile-based polymer material and the positive electrode active material. This can more effectively enhance ion transport efficiency at the positive electrode interface. Additionally, the nitrile-based polymer material on the surface of the positive electrode active material can better capture hydrogen ions, thereby stabilizing the metal elements on the surface of the positive electrode active material, reducing the impact of hydrogen ions generated by the fluorinated polymer in the negative electrode film layer on battery performance, and further synergistically improving the cycle performance of the battery.

In some embodiments, the positive electrode premix further includes a second solvent, and a solid content of the positive electrode premix is 80% to 90%.

In the above embodiments, adding a second solvent to the positive electrode premix can improve the dispersion of the nitrile-based polymer material, making it easier to coat the positive electrode active material, further enhancing the cycle performance of the battery. The solid content of the positive electrode premix is further defined, and when the solid content is 80% to 90%, the pre-coating effect of the nitrile-based polymer material on the positive electrode active material is better, thereby better protecting the stability of the positive electrode/electrolyte interface and improving the cycle performance of the battery. For example, the solid content of the positive electrode premix can be 80%, 81%, 82%, 83%, 84%, 85%, 86%, 87%, 88%, 89%, 90%, or within a range defined by any of the above values. Preferably, the solid content of the positive electrode premix is 83% to 86%, resulting in better cycle performance of the battery.

In some embodiments, the types of nitrile-based polymer material, positive electrode active material, second binder, and positive electrode current collector can be selected as described in the first aspect.

In some embodiments, the second solvent may include at least one of dimethylformamide (DMF), diethylformamide, dimethylacetamide (DMAc), N-methylpyrrolidone (NMP), methanol, ethanol, 1-propanol, 2-propanol (isopropanol), 1-butanol (n-butanol), 2-methyl-1-propanol (isobutanol), 2-butanol (sec-butanol), 1-methyl-2-propanol (tert-butanol), pentanol, hexanol, heptanol, octanol; glycols such as ethylene glycol, diethylene glycol, triethylene glycol, propylene glycol, 1,3-propanediol, 1,3-butanediol, 1,5-pentanediol, hexanediol, glycerol, trimethylolpropane, pentaerythritol, sorbitol, ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, tetraethylene glycol monobutyl ether, acetone, methyl ethyl ketone, methyl propyl ketone, cyclopentanone, ethyl acetate, γ-butyrolactone, and ε-caprolactone.

In some embodiments, after the positive electrode slurry is applied on at least one side of the positive electrode current collector, processes such as drying and cold pressing may be performed to form the positive electrode film layer.

In some embodiments, the positive electrode plate, negative electrode plate, and separator may be formed into an electrode assembly through a winding process or a lamination process.

### Battery cell

In a third aspect, this application provides a battery cell including the electrode assembly described in any embodiment of the first aspect or an electrode assembly obtained by the preparation method described in any embodiment of the second aspect.

According to this application, the battery cell includes the electrode assembly described in any embodiment of the first aspect or an electrode assembly obtained by the preparation method described in any embodiment of the second aspect, achieving the beneficial effects of the first or second aspect.

Similarly, the battery cell further includes an electrolyte, which serves to conduct ions between the positive electrode plate and the negative electrode plate.

### [Electrolyte]

The electrolyte serves to conduct ions between the positive electrode plate and the negative electrode plate. This application imposes no specific restrictions on the type of electrolyte, which can be selected based on needs. For example, the electrolyte may be liquid, gel, or all-solid-state.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolytic solution may optionally further include additives. For example, the additives may include negative electrode film-forming additives, positive electrode film-forming additives, and additives that improve certain battery performances, such as additives for improving overcharge performance of the battery, and additives for improving high-temperature or low-temperature performance of the battery.

In some embodiments, the battery cell may include an outer package. The outer package may be used to encapsulate the electrode assembly and the electrolyte.

In some embodiments, the outer package of the battery cell may be a hard shell, such as a hard plastic shell, an aluminum shell, or a steel shell. The outer package of the battery cell may also be a soft package, such as a pouch. The material of the soft package may be plastic, such as polypropylene, polybutylene terephthalate, or polybutylene succinate.

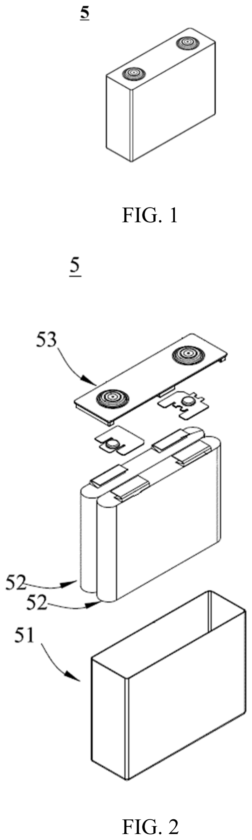

This application imposes no particular restrictions on the shape of the battery cell, which may be cylindrical, prismatic, or any other shape. For example, FIG. 1 shows a battery cell 5 with a prismatic structure as an example.

In some embodiments, referring to FIG. 2, the outer package may include a housing 51 and a cover plate 53. The housing 51 may include a bottom plate and side plates connected to the bottom plate, which together form a receiving cavity. The housing 51 has an opening communicating with the receiving cavity, and the cover plate 53 can cover the opening to seal the receiving cavity. The positive electrode plate, negative electrode plate, and separator may be formed into an electrode assembly 52 through a winding process or a lamination process. The electrode assembly 52 is encapsulated in the receiving cavity. The electrolyte infiltrates the electrode assembly 52. The number of electrode assemblies 52 contained in the battery cell 5 may be one or more, and persons skilled in the art can select the number based on specific needs.

### Battery

In a fourth aspect, this application provides a battery including the battery cell described in any embodiment of the third aspect.

According to this application, battery cells can be assembled into a battery. An embodiment of this application further provides a battery including: a box and the above-mentioned battery cell, where the battery cell is accommodated in the box.

The number of battery cells included in the battery may be one or more, and persons skilled in the art can select the specific number based on the application and capacity of the battery.

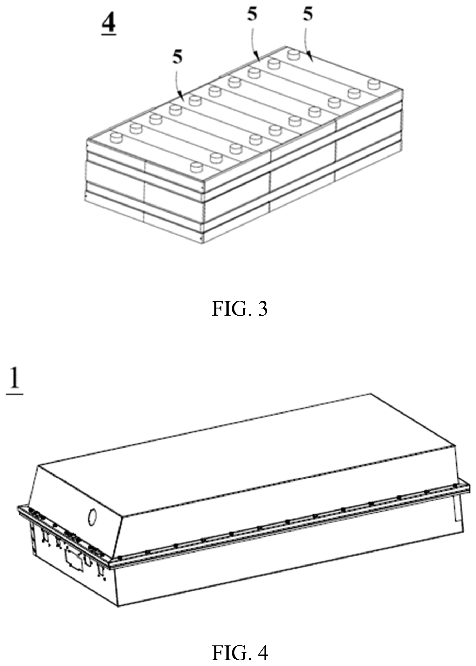

Further, in the above battery, multiple battery cells may be assembled to form a battery module. FIG. 3 shows a battery module 4 as an example. Referring to FIG. 3, in the battery module 4, multiple battery cells 5 may be sequentially arranged along the length direction of the battery module 4. Certainly, they can also be arranged in any other manner. Further, the multiple battery cells 5 may be fixed by fasteners.

Optionally, the battery module 4 may further include a casing with a receiving space, in which the multiple battery cells 5 are accommodated.

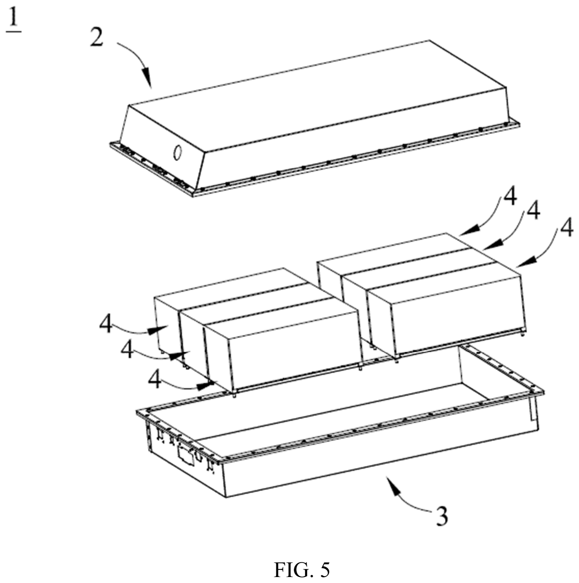

FIG. 4 and FIG. 5 show a battery 1 as an example. Referring to FIG. 4 and FIG. 5, the battery 1 may include a battery box and multiple battery modules 4 disposed in the battery box. The battery box includes an upper box body 2 and a lower box body 3, with the upper box body 2 covering the lower box body 3 to form a closed space for accommodating the battery modules 4. The multiple battery modules 4 may be arranged in the battery box in any manner.

The above battery may be a secondary battery or a lithium battery.

### Electric device

In a fifth aspect, this application provides an electric device including at least one of the battery cell described in any embodiment of the third aspect or the battery described in any embodiment of the fourth aspect.

This application also provides an electric device, where the electric device including the battery cell or battery provided by this application. The battery cell or battery may be used as a power source or an energy storage unit for the electric device. The electric device may include, but is not limited to, mobile devices (for example, mobile phones, laptops), electric vehicles (for example, battery electric vehicles, hybrid electric vehicles, plug-in hybrid electric vehicles, electric bicycles, electric scooters, electric golf carts, electric trucks), electric trains, ships, satellites, and energy storage systems.

The battery cell or battery can be selected for the electric device based on its usage requirements.

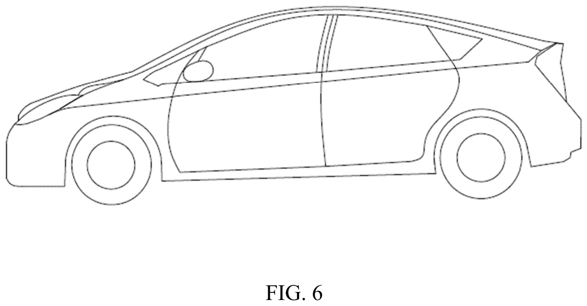

FIG. 6 shows an electric device as an example. The electric device is a battery electric vehicle, a hybrid electric vehicle, or a plug-in hybrid electric vehicle.

As another example, the device may be a mobile phone, tablet, or laptop. Such devices typically require thin and lightweight designs and may use a battery cell as a power source.

### Examples

Hereinafter, examples of this application are described. The examples described below are exemplary and are only used to explain this application, and should not be construed as limiting this application. For examples where specific techniques or conditions are not specified, they are carried out according to techniques or conditions described in the literature in the art or according to product specifications. Reagents or instruments used without specifying the manufacturer are conventional products available commercially.

### Example 1-1

### (1) Preparation of positive electrode plate

Lithium cobalt oxide and a nitrile-based polymer material were dry-mixed, and a small amount of N-methylpyrrolidone was added to obtain a positive electrode premix with a solid content of 85%. The mixture was stirred until the positive electrode premix reached a dough-like state, stirring for at least 60 minutes. Subsequently, polyvinylidene fluoride and conductive carbon black were added, mixed uniformly, and then a sufficient amount of NMP was added with stirring to dissolve and disperse, forming a uniformly dispersed positive electrode slurry. The mass ratio of lithium cobalt oxide, nitrile-based polymer material, polyvinylidene fluoride, and conductive carbon black was 96.8:0.5:1.5:1.2. The nitrile-based polymer material was nitrile rubber, with a cyano group mass percentage of 20% and a weight-average molecular weight of 400,000. The positive electrode slurry was uniformly applied on an aluminum foil positive electrode current collector, followed by drying, cold pressing, and slitting to obtain the positive electrode plate.

### (2) Preparation of negative electrode plate

Artificial graphite, a fluorinated polymer emulsion, and sodium carboxymethyl cellulose (CMC-Na) were added to deionized water and thoroughly kneaded to obtain a negative electrode premix. Appropriate amounts of water and styrene-butadiene rubber (SBR) were then added, followed by stirring to obtain a negative electrode slurry. The mass ratio of artificial graphite, fluorinated polymer, sodium carboxymethyl cellulose, and styrene-butadiene rubber was 96.3:1:1.2:1.5, with the fluorinated polymer being polyvinylidene fluoride. The negative electrode slurry was applied on a copper foil negative electrode current collector, followed by drying, cold pressing, and slitting to obtain the negative electrode plate.

### (3) Preparation of electrolyte

At 25°C, ethylene carbonate (EC), ethyl methyl carbonate (EMC), and diethyl carbonate (DEC) were mixed in a volume ratio of 1:1:1 to obtain a mixed solvent. LiPF₆ was then dissolved in the mixed solvent to obtain an electrolyte with a LiPF₆ concentration of 1 mol/L.

### (4) Preparation of separator

A 7 µm thick polyethylene (PE) separator substrate was coated with a 3 µm ceramic coating.

### (5) Preparation of secondary battery

The positive electrode plate, composite separator, and negative electrode plate were stacked in order and wound, followed by cold pressing (during which the separator adhered to the electrode plates) to obtain an electrode assembly. The electrode assembly was placed in an outer package, the prepared electrolyte was added, and after encapsulation, standing, formation, and aging processes, a secondary battery was obtained.

### Examples 1-1 to 1-13

The preparation of the positive electrode plate, negative electrode plate, electrolyte, separator, and secondary battery was similar to Example 1-1, with the only differences being in some of the parameter conditions, as detailed in Table 1.

### Example 1-14

The preparation of the electrolyte, separator, and secondary battery was similar to Example 1-1, with the following differences:

### (1) Preparation of positive electrode plate

Lithium cobalt oxide, nitrile-based polymer, polyvinylidene fluoride, and conductive carbon black were added to a sufficient amount of NMP with stirring to dissolve and disperse, forming a uniformly dispersed positive electrode slurry. The mass ratio of lithium cobalt oxide, nitrile-based polymer material, polyvinylidene fluoride, and conductive carbon black was 96.8:0.5:1.5:1.2. The nitrile-based polymer material was nitrile rubber, with a cyano group mass percentage of 20% and a weight-average molecular weight of 400,000. The positive electrode slurry was uniformly applied on an aluminum foil positive electrode current collector, followed by drying, cold pressing, and slitting to obtain the positive electrode plate.

### (2) Preparation of negative electrode plate

Artificial graphite, a fluorinated polymer emulsion, sodium carboxymethyl cellulose (CMC-Na), and styrene-butadiene rubber (SBR) were added to a sufficient amount of deionized water with stirring to dissolve and disperse, forming a uniformly dispersed negative electrode slurry. The mass ratio of artificial graphite, fluorinated polymer, sodium carboxymethyl cellulose, and styrene-butadiene rubber was 96.3:1:1.2:1.5, with the fluorinated polymer being polyvinylidene fluoride. The negative electrode slurry was coated on a copper foil negative electrode current collector, followed by drying, cold pressing, and slitting to obtain the negative electrode plate.

### Example 1-15

The preparation of the negative electrode plate, electrolyte, separator, and secondary battery was similar to Example 1-1, with the following difference:

### (1) Preparation of Positive Electrode Plate

Lithium cobalt oxide, nitrile-based polymer, polyvinylidene fluoride, and conductive carbon black were added to a sufficient amount of NMP with stirring to dissolve and disperse, forming a uniformly dispersed positive electrode slurry. The mass ratio of lithium cobalt oxide, nitrile-based polymer material, polyvinylidene fluoride, and conductive carbon black was 96.8:0.5:1.5:1.2. The nitrile-based polymer material was nitrile rubber, with a cyano group mass percentage of 20% and a weight-average molecular weight of 400,000. The positive electrode slurry was uniformly applied on an aluminum foil positive electrode current collector, followed by drying, cold pressing, and slitting to obtain the positive electrode plate.

### Example 1-16

The preparation of the positive electrode plate, electrolyte, separator, and secondary battery was similar to Example 1-1, with the following difference:

### (2) Preparation of Negative Electrode Plate

Artificial graphite, a fluorinated polymer emulsion, sodium carboxymethyl cellulose (CMC-Na), and styrene-butadiene rubber (SBR) were added to a sufficient amount of deionized water with stirring to dissolve and disperse, forming a uniformly dispersed negative electrode slurry. The mass ratio of artificial graphite, fluorinated polymer, sodium carboxymethyl cellulose, and styrene-butadiene rubber was 96.3:1:1.2:1.5, with the fluorinated polymer being polyvinylidene fluoride. The negative electrode slurry was applied on a copper foil negative electrode current collector, followed by drying, cold pressing, and slitting to obtain the negative electrode plate.

### Comparative Example 1-1

The preparation of the electrolyte, separator, and secondary battery was similar to Example 1-1, with the following differences:

### (1) Preparation of positive electrode plate

Lithium cobalt oxide, polyvinylidene fluoride, and conductive carbon black were added to a sufficient amount of NMP with stirring to dissolve and disperse, forming a uniformly dispersed positive electrode slurry. The mass ratio of lithium cobalt oxide, polyvinylidene fluoride, and conductive carbon black was 97.3:1.5:1.2. The positive electrode slurry was uniformly applied on an aluminum foil positive electrode current collector, followed by drying, cold pressing, and slitting to obtain the positive electrode plate.

### (2) Preparation of negative electrode plate

Artificial graphite, sodium carboxymethyl cellulose (CMC-Na), and styrene-butadiene rubber (SBR) were added to a sufficient amount of deionized water with stirring to dissolve and disperse, forming a uniformly dispersed negative electrode slurry. The mass ratio of artificial graphite, sodium carboxymethyl cellulose, and styrene-butadiene rubber was 97.3:1.2:1.5. The negative electrode slurry was applied on a copper foil negative electrode current collector, followed by drying, cold pressing, and slitting to obtain the negative electrode plate.

### Comparative Example 1-2

The preparation of the negative electrode plate, electrolyte, separator, and secondary battery was similar to Example 1-1, with the following difference:

### (1) Preparation of positive electrode plate

Lithium cobalt oxide, polyvinylidene fluoride, and conductive carbon black were added to a sufficient amount of NMP with stirring to dissolve and disperse, forming a uniformly dispersed positive electrode slurry. The mass ratio of lithium cobalt oxide, polyvinylidene fluoride, and conductive carbon black was 97.3:1.5:1.2. The positive electrode slurry was uniformly applied on an aluminum foil positive electrode current collector, followed by drying, cold pressing, and slitting to obtain the positive electrode plate.

### Comparative Example 1-3

The preparation of the positive electrode plate, electrolyte, separator, and secondary battery was similar to Example 1-1, with the following difference:

### (2) Preparation of negative electrode plate

Artificial graphite, sodium carboxymethyl cellulose (CMC-Na), and styrene-butadiene rubber (SBR) were added to a sufficient amount of deionized water with stirring to dissolve and disperse, forming a uniformly dispersed negative electrode slurry. The mass ratio of artificial graphite, sodium carboxymethyl cellulose, and styrene-butadiene rubber was 97.3:1.2:1.5. The negative electrode slurry was applied on a copper foil negative electrode current collector, followed by drying, cold pressing, and slitting to obtain the negative electrode plate.

### Examples 2-1 to 2-29

The preparation of the positive electrode plate, negative electrode plate, electrolyte, separator, and secondary battery was similar to Example 1-1, with the only differences being in some of the parameter conditions, as detailed in Table 2.

### Tests

### 1. Cycle performance

At 45°C, the secondary battery was charged at a rate of 0.5C to 3.65V, followed by constant voltage charging until the current was below 0.05C, and then discharged at a rate of 1C to 2.5V. This full charge-discharge cycle was repeated until the discharge capacity of the secondary battery decayed to 80% of the initial capacity, and the number of cycles at this point was recorded.

### 2. Electrolyte HF content test

At 25°C, the secondary battery was charged at a rate of 0.5C to 3.65V, followed by constant voltage charging until the current was below 0.05C, and then discharged at a rate of 1C to 2.5V. After 500 full charge-discharge cycles, the secondary battery was disassembled to collect the electrolyte. The free H⁺ in the electrolyte was measured using the HF acid-base titration method to obtain the HF content. Approximately 15 g of the sample was weighed, an indicator was added, the initial burette volume was recorded, titration was performed until the endpoint, and the burette volume at that point was recorded to calculate the HF content.

### 3. Co metal ion test

Due to the dissolution and deposition of metal ions from the positive electrode side onto the anode (that is, negative electrode) during prolonged cycling and storage, the metal ion content was tested using inductively coupled plasma (ICP) technology. The anode plate, disassembled after cycling or storage, was dried, a small amount of anode powder was scraped off using a polytetrafluoroethylene spoon, and after microwave digestion, the Co metal ion content in the anode was tested.

The results of Examples 1-1 to 1-16 and Comparative Examples 1-1 to 1-3 are shown in Table 1; the results of Examples 2-1 to 2-29 are shown in Table 2.

**Table 1**

| | Fluorinated polymer in negative electrode plate | Nitrile-based polymer material in positive electrode plate | Solid content of positive electrode premix (%) | Cycle number at 45°C | HF content (ppm) | Co metal ion content (ppm) |
|---|---|---|---|---|---|---|
| Example 1-1 | Polyvinylidene fluoride | Nitrile rubber | 85 | 1950 | 60 | 32 |
| Example 1-2 | Ethylene-tetrafluoroethylene copolymer | Nitrile rubber | 85 | 1760 | 65 | 31 |
| Example 1-3 | Polyvinyl fluoride | Nitrile rubber | 85 | 1820 | 80 | 43 |
| Example 1-4 | Fluorinated polyacrylate fluororubber | Nitrile rubber | 85 | 1680 | 85 | 45 |
| Example 1-5 | Fluorosilicone rubber | Nitrile rubber | 85 | 1745 | 78 | 39 |
| Example 1-6 | Polyvinylidene fluoride | Hydrogenated nitrile rubber | 85 | 1890 | 66 | 32 |
| Example 1-7 | Polyvinylidene fluoride | Carboxylated nitrile rubber | 85 | 1870 | 76 | 39 |
| Example 1-8 | Polyvinylidene fluoride | Polyacrylonitrile | 85 | 1750 | 80 | 41 |
| Example 1-9 | Polyvinylidene fluoride | Vulcanized nitrile rubber | 85 | 1675 | 94 | 49 |
| Example 1-10 | Polyvinylidene fluoride | Nitrile rubber | 75 | 1660 | 72 | 38 |
| Example 1-11 | Polyvinylidene fluoride | Nitrile rubber | 80 | 1720 | 65 | 39 |
| Example 1-12 | Polyvinylidene fluoride | Nitrile rubber | 90 | 1840 | 80 | 41 |
| Example 1-13 | Polyvinylidene fluoride | Nitrile rubber | 95 | 1586 | 90 | 47 |
| Example 1-14 | Polyvinylidene fluoride | Nitrile rubber | \ | 1380 | 105 | 54 |
| Example 1-15 | Polyvinylidene fluoride | Nitrile rubber | \ | 1450 | 102 | 56 |
| Example 1-16 | Polyvinylidene fluoride | Nitrile rubber | 85 | 1750 | 110 | 57 |
| Comparative Example 1-1 | \ | \ | \ | 885 | 120 | 62 |
| Comparative Example 1-2 | Polyvinylidene fluoride | \ | \ | 1040 | 150 | 77 |
| Comparative Example 1-3 | \ | Nitrile rubber | 85 | 1085 | 33 | 18 |

| | | | | | | |
|---|---|---|---|---|---|---|
| Note: In Table 1, "\" indicates absence of that parameter. | | | | | | |

**Table 2**

| | Mass percentage of fluorinated polymer in negative electrode film layer (%) | Nitrile-based polymer material | | | Cycle number at 45°C | HF content (ppm) | Co metal ion content (ppm) |
|---|---|---|---|---|---|---|---|
| | | Mass percentage in positive electrode film layer (%) | Mass percentage of cyano groups (%) | Weight-average molecular weight (×10⁴) | | | |
| Example 2-1 | 0.08 | 0.5 | 20 | 40 | 1190 | 43 | 21 |
| Example 2-2 | 0.1 | 0.5 | 20 | 40 | 1280 | 48 | 25 |
| Example 2-3 | 0.2 | 0.5 | 20 | 40 | 1350 | 50 | 25 |
| Example 2-4 | 0.5 | 0.5 | 20 | 40 | 1820 | 64 | 43 |
| Example 1-1 | 1 | 0.5 | 20 | 40 | 1950 | 60 | 32 |
| Example 2-5 | 2 | 0.5 | 20 | 40 | 1830 | 75 | 42 |
| Example 2-6 | 2.5 | 0.5 | 20 | 40 | 1750 | 80 | 60 |
| Example 2-7 | 2.7 | 0.5 | 20 | 40 | 1620 | 88 | 78 |
| Example 2-8 | 1 | 0.5 | 20 | 40 | 1650 | 120 | 90 |
| Example 2-9 | 1 | 0.15 | 20 | 40 | 1730 | 106 | 78 |
| Example 2-10 | 1 | 0.2 | 20 | 40 | 1840 | 87 | 46 |
| Example 2-11 | 1 | 1 | 20 | 40 | 1876 | 50 | 25 |
| Example 2-12 | 1 | 1.5 | 20 | 40 | 1805 | 45 | 22 |
| Example 2-13 | 1 | 2 | 20 | 40 | 1760 | 43 | 21 |
| Example 2-14 | 1 | 4 | 20 | 40 | 1680 | 35 | 18 |
| Example 2-15 | 1 | 5 | 20 | 40 | 1540 | 30 | 14 |
| Example 2-16 | 1 | 5.5 | 20 | 40 | 1480 | 20 | 11 |
| Example 2-17 | 1 | 0.5 | 10 | 40 | 1640 | 95 | 48 |
| Example 2-18 | 1 | 0.5 | 15 | 40 | 1780 | 76 | 41 |
| Example 2-19 | 1 | 0.5 | 25 | 40 | 1850 | 58 | 30 |
| Example 2-20 | 1 | 0.5 | 30 | 40 | 1820 | 53 | 28 |
| Example 2-21 | 1 | 0.5 | 40 | 40 | 1730 | 42 | 19 |
| Example 2-22 | 1 | 0.5 | 50 | 40 | 1540 | 42 | 19 |
| Example 2-23 | 1 | 0.5 | 55 | 40 | 1450 | 35 | 15 |
| Example 2-24 | 1 | 0.5 | 20 | 10 | 1580 | 42 | 20 |
| Example 2-25 | 1 | 0.5 | 20 | 20 | 1750 | 53 | 26 |
| Example 2-26 | 1 | 0.5 | 20 | 80 | 1830 | 65 | 38 |
| Example 2-27 | 1 | 0.5 | 20 | 100 | 1630 | 73 | 49 |
| Example 2-28 | 1 | 0.5 | 20 | 200 | 1430 | 92 | 50 |
| Example 2-29 | 1 | 0.5 | 20 | 220 | 1380 | 102 | 58 |

| | | | | | | | |
|---|---|---|---|---|---|---|---|
| Note: In Table 2, the sum of the mass percentages of the components in the positive electrode film layer is 100%, with the mass percentages of polyvinylidene fluoride and conductive carbon black remaining constant; the sum of the mass percentages of the components in the negative electrode film layer is 100%, with the mass percentages of sodium carboxymethyl cellulose (CMC-Na) and styrene-butadiene rubber (SBR) remaining constant. | | | | | | | |

According to Table 1, the cycle performance of the secondary batteries obtained in the examples is significantly better than that of the comparative examples, indicating that the electrode assembly provided by this application can effectively improve the cycle performance of secondary batteries. In Comparative Example 1-2, where only the negative electrode plate contains a fluorinated polymer, although it can stabilize the SEI film and enhance ionic conductivity to reduce polarization and improve cycle performance of the battery to some extent, it also increases the HF content in the electrolyte and the cobalt ion content in the anode, leading to reduced stability of the positive electrode active material and poorer cycle performance. In Comparative Example 1-3, where only the positive electrode plate contains a nitrile-based polymer material, although it can effectively reduce the HF content in the electrolyte and improve the stability of the positive electrode active material, the SEI film may be unstable with poor ionic conductivity, resulting in poorer cycle performance.

Comparing Examples 1-1 to 1-9, it can be seen that using different types of fluorinated polymers and nitrile-based polymer materials can all effectively improve the cycle performance of secondary batteries.

Comparing Examples 1-1 and 1-10 to 1-13, it can be seen that the solid content in the positive electrode premix has a certain impact on the cycle performance of secondary batteries. When the solid content in the positive electrode premix is 80% to 90%, the cycle performance of the battery is better.

Comparing Examples 1-1 and 1-14 to 1-16, it can be seen that pre-mixing the active material with the fluorinated polymer or nitrile-based polymer material during the preparation of the positive and negative electrode plates has a certain impact on the cycle performance of secondary batteries. When the active material is pre-mixed with the fluorinated polymer or nitrile-based polymer material before preparing the positive and negative electrode slurries, the cycle performance of the battery is better.

According to Table 2, comparing Examples 1-1 and 2-1 to 2-7, it can be seen that the mass percentage of the fluorinated polymer in the negative electrode film layer has a certain impact on the cycle performance of secondary batteries. When the mass percentage of the fluorinated polymer in the negative electrode film layer is 0.1% to 2.5%, the cycle performance of the secondary battery is better; when the mass percentage of the fluorinated polymer in the negative electrode film layer is 0.2% to 2%, the cycle performance of the secondary battery is the best.

Comparing Examples 1-1 and 2-8 to 2-16, it can be seen that the mass percentage of the nitrile-based polymer material in the positive electrode film layer has a certain impact on the cycle performance of secondary batteries. When the mass percentage of the nitrile-based polymer material in the positive electrode film layer is 0.2% to 5%, the cycle performance of the secondary battery is better; when the mass percentage of the nitrile-based polymer material in the positive electrode film layer is 0.5% to 1.5%, the cycle performance of the secondary battery is the best.

Comparing Examples 1-1 and 2-17 to 2-23, it can be seen that the mass percentage of cyano groups in the nitrile-based polymer material has a certain impact on the cycle performance of secondary batteries. When the mass percentage of cyano groups in the nitrile-based polymer material is 15% to 50%, the cycle performance of the secondary battery is better; when the mass percentage of cyano groups in the nitrile-based polymer material is 25% to 40%, the cycle performance of the secondary battery is the best.

Comparing Examples 1-1 and 2-24 to 2-29, it can be seen that the weight-average molecular weight of the nitrile-based polymer material has a certain impact on the cycle performance of secondary batteries. When the weight-average molecular weight of the nitrile-based polymer material is 200,000 to 2,000,000, the cycle performance of the secondary battery is better; when the weight-average molecular weight of the nitrile-based polymer material is 400,000 to 1,000,000, the cycle performance of the secondary battery is the best.

The possible reasons for the above results have been explained above and will not be repeated here.

It should be noted that this application is not limited to the above embodiments. The above embodiments are merely exemplary, and any embodiments within the scope of the technical solution of this application that have substantially the same configuration and achieve the same effects as the technical idea are included in the technical scope of this application. Additionally, without departing from the gist of this application, various modifications that can be conceived by persons skilled in the art applied to the embodiments and other forms constructed by combining some of the constituent elements of the embodiments are also included in the scope of this application.

## Claims

1. An electrode assembly comprising a negative electrode plate, a positive electrode plate, and a separator,
wherein the negative electrode plate comprises a negative electrode film layer, the negative electrode film layer comprising a fluorinated polymer; and
the positive electrode plate comprises a positive electrode film layer, the positive electrode film layer comprising a nitrile-based polymer material.

2. The electrode assembly according to claim 1, wherein the fluorinated polymer comprises at least one of polyvinylidene fluoride, ethylene-tetrafluoroethylene copolymer, polyvinyl fluoride, fluorinated polyacrylate fluororubber, fluorinated polyester rubber, and fluorosilicone rubber.

3. The electrode assembly according to claim 1 or 2, wherein a mass percentage of the fluorinated polymer in the negative electrode film layer is 0.1% to 2.5%.

4. The electrode assembly according to claim 1, wherein the positive electrode film layer satisfies at least one of the following conditions:
(1) the nitrile-based polymer material has a weight-average molecular weight of 200,000 to 2,000,000;
(2) a mass percentage of cyano groups in the nitrile-based polymer material is 15% to 50%; and
(3) a mass percentage of the nitrile-based polymer material in the positive electrode film layer is 0.2% to 5%.

5. The electrode assembly according to claim 1, wherein the positive electrode film layer satisfies at least one of the following conditions:
(1) the nitrile-based polymer material has a weight-average molecular weight of 400,000 to 1,000,000;
(2) a mass percentage of cyano groups in the nitrile-based polymer material is 25% to 40%; and
(3) a mass percentage of the nitrile-based polymer material in the positive electrode film layer is 0.5% to 1.5%.

6. The electrode assembly according to claim 4 or 5, wherein the nitrile-based polymer material comprises at least one of nitrile rubber, hydrogenated nitrile rubber, carboxylated nitrile rubber, polyacrylonitrile, and vulcanized nitrile rubber.

7. The electrode assembly according to claim 1, wherein the positive electrode film layer further comprises a second binder, the second binder comprising at least one of polyvinylidene fluoride, polyvinylidene fluoride-hexafluoropropylene copolymer, polyvinyl alcohol, starch, hydroxypropyl cellulose, regenerated cellulose, polyvinylpyrrolidone, polytetrafluoroethylene, polyethylene, polypropylene, ethylene-propylene-diene polymer, sodium carboxymethyl cellulose, and styrene-butadiene rubber.

8. The electrode assembly according to claim 1, wherein the positive electrode film layer comprises a positive electrode active material, the positive electrode active material comprising at least one of lithium iron phosphate, lithium cobalt oxide, and LiₐNiₓCo_{y}M_{1-x-y}O_{b},
wherein 0.8 < a < 1.2, 0 < x < 1, 0 < y < 1, 1.8 < b < 2.2, and M is selected from Mn and/or Al.

9. A preparation method of an electrode assembly, comprising the following steps:
forming a negative electrode film layer on at least one side of a negative electrode current collector to obtain a negative electrode plate,
wherein the negative electrode film layer comprises a fluorinated polymer; and
forming a positive electrode film layer on at least one side of a positive electrode current collector to obtain a positive electrode plate,
wherein the positive electrode film layer comprises a nitrile-based polymer material.

10. The preparation method according to claim 9, wherein the forming a negative electrode film layer on at least one side of a negative electrode current collector specifically comprises:
uniformly mixing a negative electrode active material with a fluorinated polymer to disperse the fluorinated polymer on the surface of the negative electrode active material, thereby obtaining a negative electrode premix;
dispersing the negative electrode premix and a first binder in a first solvent to obtain a negative electrode slurry; and
applying the negative electrode slurry on at least one side of the negative electrode current collector to form the negative electrode film layer.

11. The preparation method according to claim 10, wherein the negative electrode premix further comprises a first binder and a first solvent.

12. The preparation method according to claim 9, wherein the forming a positive electrode film layer on at least one side of a positive electrode current collector specifically comprises:
uniformly mixing a positive electrode active material with a nitrile-based polymer material to disperse the nitrile-based polymer material on the surface of the positive electrode active material, thereby obtaining a positive electrode premix;
dispersing the positive electrode premix and a second binder in a second solvent to obtain a positive electrode slurry; and
applying the positive electrode slurry on at least one side of the positive electrode current collector to form the positive electrode film layer.

13. The preparation method according to claim 12, wherein the positive electrode premix further comprises a second solvent, and a solid content of the positive electrode premix is 80% to 90%.

14. The preparation method according to claim 13, wherein the solid content of the positive electrode premix is 83% to 86%.

15. A battery cell comprising the electrode assembly according to any one of claims 1 to 8 or an electrode assembly obtained by the preparation method according to any one of claims 9 to 14.

16. A battery comprising the battery cell according to claim 15.

17. An electric device comprising at least one of the battery cell according to claim 15 or the battery according to claim 16.
